# DEMANDE DE BREVET EUROPEEN

(11) **EP 3 660 082 A1**
(43) Date de publication de la demande: **03.06.2020**
(21) Numéro de dépôt: 19211885.9
(22) Date de dépôt: 27.11.2019
(51) Int. Cl.: C08J 5/24, C08J 5/10

(54) **PROCEDE DE FABRICATION D'UN PRE-IMPREGNE METTANT EN OEUVRE UN COLORANT EN TANT QUE PHOTOAMORCEUR, ET UTILISATION D'UN TEL COLORANT**

(30) Priorité: 27.11.2018 FR 1871926
(71) Demandeur: A ET A - Mader, 59800 Lille (FR); Université de Haute Alsace, 68093 Mulhouse Cedex (FR)
(72) Inventeur: FREY, Corinne, 68520 BURNHAUPT LE BAS (FR); MYARD, Philippe, 84340 ENTRECHAUX (FR); CRIQUI, Adrien, 68190 LINGERSHEIM (FR); RETAILLEAU, Matthieu, 1200 Woluwe Saint Lambert (BE); IBRAHIM, Ahmad, MONTREAL, QC HIL 4V1 (CA); PIERREL, Johann, 68100 MULHOUSE (FR); ALLONAS, Xavier, 68100 MULHOUSE (FR); CROUTXE-BARGHORN, Céline, 68150 RANTZWILLER (FR); LEY, Christian, 68200 MULHOUSE (FR)
(74) Mandataire: Cabinet Beau de Loménie

(57) **Abrégé**

L'invention concerne un procédé de fabrication d'un préimprégné comprenant l'imprégnation et la photopolymérisation d'au moins un renfort imprégné d'une composition photopolymérisable comprenant au moins une résine ayant au moins une double liaison carbone-carbone -C=C-, et au moins un photoamorceur B choisi parmi : la Safranine O, le bleu de méthylène, et le nouveau bleu de méthylène, ou leur mélange.

L'invention concerne également l'utilisation d'un tel photomamorceur B pour la fabrication d'un pré-imprégné, et la fabrication d'une pièce composite à partir dudit imprégné obtenu.

## Description

### Domaine Technique

La présente invention concerne le domaine technique des procédés de fabrication des pré-imprégnés, et des pièces composites obtenues à partir de ces pré-imprégnés ainsi que l'utilisation d'un photoamorceur spécifique améliorant la fabrication de tels pré-imprégnés.

### Technique antérieure

La fabrication d'un renfort pré-imprégné consiste à gélifier la résine imprégnant le renfort afin de faciliter sa manipulation et/ou son stockage sans que ladite résine ne coule. La résine imprégnant le renfort est ainsi polymérisée partiellement, et non totalement. Le pré-imprégné obtenu présente ainsi un pouvoir collant, également qualifié de tack.

Cette polymérisation incomplète peut être obtenue en augmentant la viscosité de la résine par un procédé physique. Par exemple en créant des liaisons hydrogènes avec la résine par l'utilisation d'oxyde de magnésium combinée avec un apport de chaleur. Cet épaississement est réversible avec la température. Ce procédé physique d'épaississement a pour inconvénient qu'il est très long (environ 48h), et que l'augmentation de la viscosité peut se poursuivre après abaissement de la température rendant le pré-imprégné inutilisable.

Les renforts imprégnés de résine(s) peuvent être également obtenus par photopolymérisation. Ils sont ainsi photopolymérisés une première fois pour la formation de pré-imprégnés, cad de renforts pré-imprégnés polymérisés partiellement. Puis, les pré-imprégnés sont superposés et mis à la forme de la pièce composite, l'ensemble ainsi formé est polymérisé au moins une seconde fois afin que la polymérisation soit complète, i.e au moins suffisante pour atteindre les performances mécaniques escomptées.

Cette technique est notamment utilisée en réparation de pièces composites et dans l'automobile pour la fabrication de pièces composites.

La polymérisation incomplète peut être obtenue en mettant en œuvre une composition photopolymérisable comprenant une résine ayant des premier et second groupes fonctionnels différents, chacun étant activable de manière séparée, par l'intermédiaire d'une source de rayonnement spécifique.

La composition photopolymérisable met en œuvre deux chimies différentes permettant de créer un réseau de couches interpénétrées (également désigné dans l'état de l'art par IPN pour « inter penetrated network »). La matrice ainsi obtenue n'est pas homogène puisqu'elle résulte de deux types de polymérisations différentes.

En outre, il existe un risque important de déphasage dans la matrice pouvant altérer les propriétés de la pièce composite résultante. Les compositions polymérisables utilisées dans ces systèmes de double cuisson ont également des problèmes de stabilité lorsque les résines supportant les différents groupes fonctionnels sont mélangées.

De plus, l'emploi de deux sources de rayonnement de nature différente, par exemple par infrarouges et ultraviolets, ne permet pas de bien contrôler la cinétique de réaction. En effet, l'échauffement généré pour amorcer une première réaction de polymérisation peut amorcer une seconde réaction de polymérisation qui est induite par apport de chaleur, ce qui est le cas lors de l'emploi des rayons infra-rouges.

La polymérisation incomplète pour l'obtention d'un pré-imprégné peut être obtenue également en mettant en œuvre une composition photopolymérisable comprenant au moins deux photoamorceurs absorbant chacun dans des domaines de longueur d'onde différent, par exemple un premier photoamorceur absorbe les longueurs d'onde supérieurs à 500 nm et un second photoamorceur absorbe les longueurs inférieures à 500 nm. Un tel procédé est décrit dans US 6 207 726 B1. EP 3 019 550 B1 décrit également un procédé de fabrication d'une pièce composite par photopolymérisation mettant en œuvre une étape de photopolymérisation partielle.

Les temps de polymérisation peuvent cependant être très longs pour obtenir une polymérisation complète dans toute l'épaisseur de la pièce composite, en particulier lorsque cette dernière comprend au moins trois plis. Par ailleurs, la combinaison d'au moins deux photoamorceurs ayant des intervalles d'absorption différents peut être complexe à mettre en œuvre. En effet, le photoamorceur permettant la polymérisation complète ne doit pas être activé lors de la polymérisation partielle. De plus, les photoamorceurs pour la réalisation de la polymérisation partielle absorbant dans un intervalle de longueurs d'onde différent de celui des photoamorceurs permettant la réalisation de la polymérisation complète, sont peu nombreux. Les composés organométalliques tels que les titanocènes (par exemple commercialisé sous la marque Irgacure® 784) peuvent être excité autour de 532 nm mais ils sont très onéreux ce qui rend leur utilisation inappropriée pour des applications à fort tonnage comme pour la fabrication de pièces composites en moyenne et en grande série.

De manière générale, la formation d'un pré-imprégné est délicate car la polymérisation doit rester partielle afin qu'elle puisse être terminée par l'application d'une source de rayonnement une fois le pré-imprégné associé à un autre pré-imprégné.

Si la polymérisation partielle est trop avancée, les pré-imprégnés n'adhèrent plus entre eux, et les plis de la pièce composite ont une mauvaise résistance à la délamination. La reproductibilité de la polymérisation partielle des pré-imprégné est particulièrement délicate s'agissant de pièces composites fabriquées en grande série.

Par ailleurs, la Safranine O est connue en tant que colorant biologique de contraste, par exemple elle est utilisée dans la coloration de Gram, ou encore en tant qu'indicateur redox.

### Exposé de l'invention

La présente invention pallie tout ou partie des problèmes précités en ce qu'elle a pour objet un procédé de fabrication d'un préimprégné comprenant :
(i) la fourniture d'au moins un renfort, et d'au moins une composition photopolymérisable comprenant au moins une résine ayant au moins une double liaison carbone-carbone -C=C-, et au moins un photoamorceur B ;
(ii) application de la composition photopolymérisable sur ledit renfort en sorte d'imprégner ledit renfort ;
(iii) application d'une source de rayonnement B pour photopolymériser le renfort imprégné obtenu à l'étape ii) ;
(iv) obtention du pré-imprégné ; ledit au moins un photoamorceur B est sélectionné parmi : la Safranine O, le bleu de méthylène, et le nouveau bleu de méthylène, ou leur mélange.

Les inventeurs ont découverts de manière surprenante que l'utilisation d'un photoamorceur B dans la liste définie ci-dessus permet d'obtenir un taux de conversion faible (notamment inférieur à 30%) à l'étape iv), et ce indépendamment de l'intensité lumineuse et/ou de la concentration en photoamorceur B. Cette disposition permet ainsi d'obtenir une polymérisation partielle du pré-imprégné parfaitement reproductible, et donc de consolider le procédé de fabrication, en particulier pour la fabrication de pièces composites en grande et moyenne séries.

En particulier, ledit au moins un photoamorceur B est la Safranine O et/ou le bleu de méthylène (M) et/ou le nouveau bleu de méthylène (NMB).

La Safranine O a été testée dans l'art antérieur comme photoamorceur dans la photopolymérisation radicalaire de film mais présente un mauvais rendement de la polymérisation.

Un taux de conversion faible est dans l'état de la technique considéré comme rédhibitoire en photopolymérisation puisque les photoamorceurs sont habituellement sélectionnés afin d'atteindre des taux de conversion tendant vers 100%.

Avantageusement, il est possible de contrôler la polymérisation partielle de la composition photopolymérisable - qualifiée de B stage dans le présent texte-facilitant alors la polymérisation totale ou finale - qualifiée de C stage dans le présent texte - du pré-imprégné lors de sa mise en forme en pièce composite.

Il convient également de noter qu'habituellement, la polymérisation partielle doit être finement contrôlée. Ainsi, le taux de polymérisation, et donc de conversion des fonctions -C=C-, en particulier en fonctions acrylates, doit être suffisant pour éviter que la résine ne reste liquide (un taux de conversion de 10% peut ainsi être généralement insuffisant selon la viscosité initiale de la résine), ni trop élevé afin que le pré-imprégné ne perde pas son tack ou pégosité (un taux de conversion supérieur ou égal à 30%, et notamment à 25% ou à 20%, peut ainsi être considéré comme trop important).

Le procédé selon l'invention permet de contrôler très finement la polymérisation partielle du pré-imprégné, et ce quel que soit la dose lumineuse, la concentration en photoamorceurs ou en co-amorceur.

De plus, il a été observé que les photoamorceurs B, en particulier la Safranine O, présente un temps d'inhibition très court (de l'ordre de quelques secondes) comparativement à d'autres colorants testés (par exemple la rhodamine 6G pour lequel le temps d'inhibition est de l'ordre de 60 secondes), ce qui permet d'obtenir un pré-imprégné en quelques secondes de manière reproductible indépendamment du temps d'irradiation.

Les photoamorceurs B selon l'invention ont également pour avantage de présenter une longueur d'onde d'absorption maximale, Àmax, supérieure ou égale à 430 nm, de préférence supérieure ou égale à 460 nm, encore de préférence supérieure ou égale à 500 nm. Cette disposition permet avantageusement de pouvoir exciter de manière sélective les photoamorceurs B, sans exciter le ou les photoamorceurs C (défini(s) ci-après) réalisant le C stage.

De préférence, la Safranine O présente une longueur d'onde d'absorption maximale, Àmax (mesurée dans l'acétonitrile) de l'ordre de 532 nm.

Les colorants sélectionnés dans la présente invention ont également pour avantage d'être disponibles facilement sur le marché et à un coût permettant leurs mises en œuvre dans des pièces composites en grande et moyenne séries.

De préférence, la résine (c'est-à-dire, le ou les monomères et/ou le ou les oligomères et/ou le ou les polymère(s)) comprend(comprennent) au moins une fonction acrylate -CH₂=CHCOO-, encore de préférence au moins deux fonctions acrylates, préférentiellement au plus six fonctions acrylates, en particulier au plus quatre fonctions acrylates par unité de répétition.

La résine peut comprend un ou des monomère(s) et/ou un ou des oligomère(s) et/ou un ou des polymère(s). Le ou les monomère(s) peut/peuvent être mélangé(s) avec un ou plusieurs oligomère(s) et/ou polymère(s) pour ajuster la viscosité de la résine à mettre en œuvre et/ou les propriétés mécaniques de la matrice finale.

On entend par monomère, tout composé comprenant une unité ou un motif de répétition, à la différence d'un oligomère pouvant comprend au moins deux unités ou motifs de répétition, notamment jusqu'à environ 100 unités de répétition. Au-delà, de 100 unités de répétition, il s'agit d'un polymère.

De préférence, ledit au moins un photoamorceur B est la Safranine O.

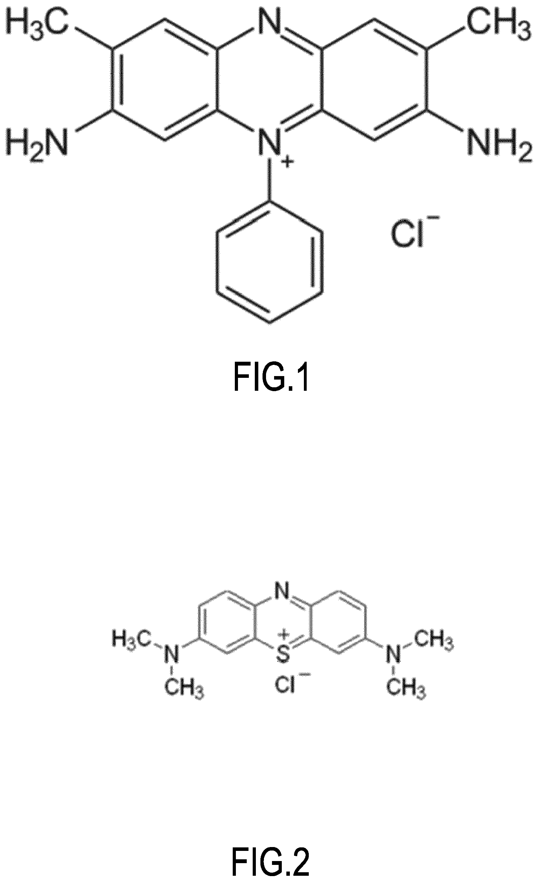

La Safranine O, dont la structure préférée est représentée à la figure 1 annexée à la présente, est un sel de 2,8-diméthyl-3,7-diaminophenazine, notamment (C₂₀H₁₉N₄⁺ ; Cl⁻).

Le bleu de méthylène, dont la structure préférée est représentée à la figure 2 annexée à la présente, est un sel de 3,7-bis(diméthylamino)phénothiazine-5-ium ou désigné sous le terme de sel de méthylthioninium.

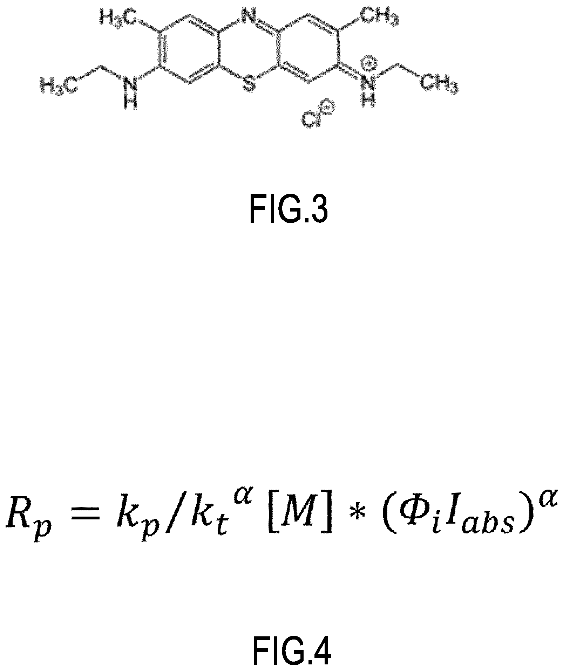

Le nouveau bleu de méthylène, dont la structure préférée, est représentée à la figure 3 annexée à la présente, est également un sel.

Les photoamorceurs B sont de préférence stabilisés par le chlore, ou tout autre anion permettant de former un sel stable, par exemple un ion nitrate.

Les isomères des photomaorceurs B précités, lorsqu'ils permettent d'obtenir des résultats équivalents à ceux indiqués dans la présente invention sont considérés comme appartenant à la définition de la Safranine O, du bleu de méthylène ou du nouveau bleu de méthylène selon la présente invention.

Le ou les photoamorceur(s) B est/sont sous forme solide à température ambiante (i.e entre 0°C et 35°C), par exemple sous forme de poudre, et donc dissous dans la résine.

Par définition, la composition photopolymérisable comprenant au moins un photoamorceur B, le rapport de la masse en photoamorceur(s) B par rapport à la masse totale de la composition photopolymérisable est supérieur à 0%.

La composition photopolymérisable peut également comprendre divers additifs, tels des stabilisants, des colorants (différents des colorants listés ci-dessus), des pigments, des charges afin d'améliorer l'aspect et les propriétés finales de la pièce composite.

De préférence, les renforts imprégnés mis en œuvre dans le cadre de la présente invention doivent pouvoir être translucides ou au moins semi-opaques aux rayons lumineux afin que les résines mises en œuvre puissent polymériser, partiellement lors du B stage, et totalement lors du C stage.

Les espèces réactives résultant de l'absorption des rayons lumineux par les photoamorceurs B, et éventuellement C définis ci-après, sont des espèces radicalaires.

Le procédé selon l'invention peut être utilisé pour la fabrication de pré-imprégnés, et de pièces composites, mais également en réparation de pièces composites.

De préférence, la masse de ladite au moins une résine représente au moins 70% en masse, encore de préférence au moins 90% en masse, préférentiellement au moins 95% en masse, de la masse totale de la composition photopolymérisable.

De préférence, la durée d'application du rayonnement B, et/ou C défini ci-après, est supérieure ou égale à une seconde, encore de préférence inférieure ou égale à 10 minutes, notamment inférieur ou égal à 5 minutes.

Dans une variante de réalisation, la composition photopolymérisable comprend un co-amorceur donneur d'électron(s) ou accepteur d'électron(s).

Le colorant, après excitation, est promu dans ses états excités et peut réagir avec un co-amorceur par une réaction de transfert d'électron(s).

De préférence, le co-amorceur est donneur d'électron(s).

Les états excités du colorant sont capables d'accepter un électron. Sous l'effet du co-amorceur donneur d'électrons, le colorant est transformé en sa forme semi-réduite et le co-amorceur en un radical cation.

Le radical cation par perte d'un hydrogène peut former un radical, par exemple aminoalkyle lorsque le co-amorceur est une amine tertiaire. Ce radical est capable d'amorcer une réaction de photopolymérisation radicalaire. Ainsi, l'irradiation du système colorant/co-amorceur par une source lumineuse, conduit à la formation de radicaux qui réagissent avec la résine, en particulier le composant comportant la double liaison carbone-carbone, par exemple un monomère et/ou un oligomère M, pour donner le premier macro-radical. S'ensuit la propagation de la réaction par addition d'unités monomères sur le macro-radical en croissance. Le processus de photopolymérisation se termine finalement par une réaction de terminaison mono ou bimoléculaire. La terminaison bimoléculaire se produit par recombinaison de deux chaînes polymères (radicaux à faible encombrement stérique) et par dismutation. Elle peut également avoir lieu entre la chaîne en croissance et des désactiveurs ou des radicaux amorceurs. Enfin, lorsque le milieu est trop visqueux, la diffusion des monomères vers les centres réactifs est restreinte, on parle alors de terminaison monomoléculaire.

Par le biais de ces différentes étapes, il est possible d'exprimer la vitesse de photopolymérisation Rp sous forme d'une équation représentée à la figure 4 annexée à la présente.

Dans un mode de réalisation, le co-amorceur est choisi dans la liste constituée par : les amines, de préférence parmi les amines primaires, les amines secondaires, et les amines tertiaires, encore de préférence parmi les amines secondaires et les amines tertiaires, notamment les amines tertiaires, en particulier les aminobenzoates, notamment comprenant un groupe diméthylamine -N(CH₃)₂, par exemple il s'agit de l'EDB (diméthylamino-4 benzoate d'éthyle) ou de l'EHA (diméthylamino-4 benzoate d'éthyl-2 hexyle) ou toute amine tertiaire comprenant un groupe diméthylamine -N(CH₃)₂, les organoborates, le N-phénylglycine (NPG).

Dans un mode de réalisation, le co-amorceur est choisi parmi les amines secondaires et/ou tertiaires, en particulier il s'agit de l'EDB ou du NPG.

De préférence, la composition photopolymérisable comprend un seul co-amorceur.

De préférence, le co-amorceur a un potentiel d'oxydation Eₒₓ inférieur ou égal à 1,20 Volts/ECS (Electrode au Calomel Saturée) ; encore de préférence inférieur ou égal à 1,00 V/ECS ; préférentiellement inférieur ou égal à 0,95 V/ECS.

Dans un mode de réalisation, éventuellement en combinaison avec les modes de réalisation précédents, le co-amorceur comprend un cycle benzénique et/ou une fonction -C(O)O-R avec R est un hydrogène ou une chaine alkyle en C1-C20.

Dans une variante de réalisation, le co-amorceur est le N-phénylglycine.

Dans une variante de réalisation, la composition photopolymérisable comprend au moins un photoamorceur C, différent du photoamorceur B.

De préférence, le photoamorceur C est choisi parmi les photoamorceurs radicalaires, cationiques, photobases ou photoacides, lesquels libèrent selon leur photolyse des espèces réactives radicalaires, ioniques, basiques ou acides, de préférence parmi les photoamorceurs radicalaires.

Dans un mode de réalisation, le photo-amorceur C est choisi parmi: les alpha hydroxyacetophenones, les alkylaminocetophénones, dialkoxyacetophenones, les acetophenones, les cetals benzyliques, les oxydes d'acylphosphine, les alpha-aminocetones aromatiques substituées, les benzophenones, les thioxanthones, les aldéhydes, les phénones hydroxyalkylés, les éthers de benzoines, les oxime esters, les alpha-sulfonylcétone, les phénylglyoxalates, les métallocènes, les sels d'onium, le BAPO (oxyde de bis(2,4,6 triméthylbenzoylphosphine), encore de préférence le BAPO.

La quantité de photoamorceur absorbé dépend généralement notamment de la puissance de la source de rayonnement lumineux mais également du temps d'application de ladite source de rayonnement, qui est fonction de la vitesse de défilement de la ou des couches de renfort imprégnés superposées à traiter ou de la source de rayonnement si lesdites couches sont statiques.

Dans une variante de réalisation, la source de rayonnement B est une source lumineuse dont les longueurs d'ondes émises sont supérieures ou égales à λ1, et le photoamorceur C est excité par l'application d'une source de rayonnement lumineuse C dont les longueurs d'ondes émises sont inférieures ou égales à λ2, λ2 étant inférieur à λ1.

De préférence, la première source de rayonnement lumineux λ1, et éventuellement la seconde source de rayonnement lumineux λ2, peut(peuvent) être une source lumineuse de type diode(s) électroluminescente(s) (i.e une ou des lampe(s) LED (« Light Emitting Diode »)), laquelle a notamment des spectres d'émission à +/-20 nm autour d'une valeur déterminée, par exemple λ1 et/ou λ2. Il est également possible d'utiliser une lampe diode laser, laquelle permet d'obtenir des spectres encore plus restreints, par exemple au moins 80% en nombre des rayons lumineux émis sont dans un intervalle à +/- 5 nm autour d'une valeur déterminée, notamment à +/- 2 nm autour d'une valeur déterminée, ici λ1 et/ou λ2.

Ces sources lumineuses ont pour avantages qu'elles produisent peu de chaleur, sont portables, ont une bonne durée de vie, et consomment peu d'énergie. Ces avantages sont particulièrement importants pour des applications en grande série et en moyenne série, dans lesquelles, la stabilité dimensionnelle des pièces composites obtenues est recherchée, et leur procédé de fabrication doit en outre être flexible.

Dans un mode de réalisation, la puissance appliquée par unité de surface traitée de la première source de rayonnement lumineux B (B stage), et/ou, la puissance appliquée par unité de surface traitée de la seconde source de rayonnement lumineux C (C stage), est/sont supérieure(s) ou égale(s) à 10 mW/cm², de préférence supérieure(s) ou égale(s) à 1 W/cm², encore de préférence supérieure(s) ou égale(s) à 2 W/cm², préférentiellement supérieure(s) ou égale(s) à 5 W/cm².

De préférence, la puissance appliquée par unité de surface traitée de la première source de rayonnement lumineux B, et/ou, la puissance appliquée par unité de surface traitée de la seconde source de rayonnement lumineux C, est/sont inférieure(s) ou égale(s) à 500 W/cm², de préférence inférieure(s) ou égale(s) à 100 W/cm², et encore de préférence inférieure(s) ou égale(s) à 10 W/cm².

La puissance peut être mesurée à l'aide d'un radiomètre Powerpuck commercialisé par EIT.

La puissance ainsi délivrée est focalisée sur des spectres quasi monochromatiques ce qui permet d'améliorer les rendements énergétiques, et corrélativement d'améliorer la maîtrise de la cinétique et du degré de polymérisation et donc de la consommation en photomamorceurs.

Dans un mode de réalisation, la ou les source(s) lumineuse(s) (B et/ou C) peut/peuvent être également une source UV.

De préférence, λ1 est supérieure ou égale à 430 nm, encore de préférence supérieure ou égale à 460 nm, éventuellement supérieur ou égale à 500 nm.

Dans un mode de réalisation, λ2 est inférieure ou égale à 500 nm, encore de préférence inférieure ou égale à 460 nm.

De préférence, λ2 est supérieure ou égale à 200 nm, encore de préférence supérieure ou égale à 300 nm.

Dans une variante de réalisation, λ2 est inférieure d'au moins 50 nm à λ1.

Dans une variante de réalisation, le taux de conversion en fonction -C=C-, à l'issue de l'étape iii), est inférieur ou égal à 30%, encore de préférence inférieur ou égal à 25%, en particulier inférieur ou égal à 20%.

On comprend par taux de conversion en fonction -C=C-, le taux de disparition des doubles liaisons -C=C-, en particulier des fonctions acrylates.

Avantageusement, les inventeurs ont découverts que ce taux de conversion est indépendant de la quantité de co-amorceur(s) et/ou de l'intensité lumineuse, ce qui permet d'obtenir un procédé de polymérisation partielle fiable pour l'obtention de pré-imprégnés. Cette disposition est particulièrement avantageuse pour la fabrication de pièces composites en moyenne et grande série.

Dans une variante de réalisation, le rapport de la masse du co-amorceur par rapport à la masse totale de la composition photopolymérisable est inférieur ou égal à 3%, de préférence inférieur ou égal à 2%.

Dans une variante de réalisation, le rapport de la masse en photoamorceur B par rapport à la masse totale de la composition photopolymérisable est inférieur ou égal à 3% ; de préférence inférieur ou égal à 1%.

Si le ratio de 3%, notamment le ratio de 1%, en particulier le ratio de 0,5%, est dépassé, il existe un risque de filtre interne. En effet, si la quantité de photoamorceur est trop importante, la lumière étant absorbée rapidement, la composition photopolymérisable polymérise rapidement en surface et empêche par la suite la pénétration de la lumière dans toute l'épaisseur du renfort imprégné. Le pré-imprégné présente alors des propriétés non homogène.

Dans une variante, le temps d'inhibition est inférieur ou égal à 15 secondes, de préférence inférieur ou égal à 10 secondes, notamment inférieur ou égal à 5 secondes, en particulier pour un volume de 1000 g de composition photopolymérisable.

Le temps d'inhibition peut être mesuré sur une courbe représentant le taux de conversion en fonctions acrylates selon le temps de réaction, obtenue par RT-FTIR.

Les inventeurs ont observé de manière surprenante qu'il est ainsi possible de fabriquer en continu des pré-imprégnés et ce à des vitesses correspondant aux cadences de fabrication des pièces en grande et moyenne séries. La vitesse de polymérisation est de préférence supérieure ou égale à 1 mètre/seconde.

Dans une variante, ladite au moins une résine est choisie dans la liste constituée par : les résines polyesters insaturés, les résines epoxy, les résines vinylesters insaturés, les résines amines non bloquées, les résines urée-formaldéhydes, les résines phénoliques, les résines méthacrylates, les résines acrylates, les résines uréthanes isocyanates, les résines polyéthers, les résines polysiloxanes, ou un mélange de ces dernières.

Dans une variante, le renfort comprend des fibres ou des fils considéré(e)s individuellement ou en combinaison, notamment mis en œuvre par tissage, tricotage, tressage, et/ou des nontissés, et/ou des particules, notamment choisis parmi la famille de matériaux suivants : para-aramide, méta-aramide, fibres à base de silice, fibres de verre, polyéthylène-téréphtalate, polyéthylène haute densité, poly(p-phénylène-2,6- benzobisoxazole (PBO), le carbone, le carbure de silicium, l'hydrate d'alumine, l'acier inoxydable, le gravier, le sable, les billes de verre, les billes d'aciers, la silice.

Dans un mode de réalisation, le rapport de la masse dudit au moins un renfort, par rapport à la masse totale de la pièce composite, est supérieur ou égal à 50%, de préférence supérieur ou égal à 65%.

Dans un mode de réalisation, le rapport de la masse de la composition photopolymérisable, formant la matrice, par rapport à la masse totale de la pièce composite, est supérieur ou égal à 0%, de préférence supérieur ou égal à 20%, encore de préférence inférieur ou égal à 50%, préférentiellement inférieur ou égal à 35%.

La présente invention a pour objet, selon un deuxième aspect, un procédé de fabrication d'une pièce composite comprenant :
a) la mise en œuvre du procédé de fabrication d'un pré-imprégné selon l'une quelconque des variantes de réalisation en référence au premier aspect de l'invention, pour l'obtention d'au moins un pré-imprégné;
b) la mise en forme dudit au moins un pré-imprégné et l'application d'une source de rayonnement C audit au moins un pré-imprégné pour photopolymériser la composition photopolymérisable dudit au moins un pré-imprégné;
c) obtention de la pièce composite.

Dans un mode de réalisation, l'étape a) est suivie d'une étape de stockage, d'au moins 5 heures, éventuellement d'au moins 24 heures, avant la réalisation de l'étape c).

La pièce composite peut comprendre un seul préimprégné, ou deux ou plus.

Dans un mode de réalisation, le taux de conversion en fonction -C=C-, notamment en fonctions acrylates, est supérieur ou égal à 70%, encore de préférence supérieur ou égal à 85%.

Dans une variante, les sources de rayonnement B et C sont des sources lumineuses, et la source lumineuse B émet des longueurs d'ondes λ1 supérieures aux longueurs d'ondes λ2 émises par la source lumineuse C.

Dans une variante, ledit au moins un renfort imprégné de la composition photopolymérisable obtenu à l'étape ii) présente une première couleur, notamment correspondant à la coloration dudit au moins un photoamorceur B, et le pré-imprégné obtenu à l'étape iv) présente une seconde couleur, différente de la première couleur.

Avantageusement, l'avancée de la polymérisation partielle peut être suivie par la consommation en photoamorceur B, et donc par sa disparition progressive.

La présente invention a pour objet, selon un troisième aspect, l'utilisation d'au moins un photoamorceur B choisi parmi : la Safranine O, le bleu de méthylène, et le nouveau bleu de méthylène, ou leur mélange, pour la fabrication d'un pré-imprégné par application d'une source de rayonnement B sur au moins un renfort imprégné d'une composition photopolymérisable comprenant au moins résine comprenant au moins une double liaison carbone-carbone -C=C-.

Dans une variante, la composition photopolymérisable comprend en outre un co-amorceur donneur d'électron(s) et/ ou accepteur d'électron(s).

Les définitions, modes de réalisation, et variantes de réalisation en référence aux premier, second et troisième aspects peuvent être combinés indépendamment les uns des autres.

### Brève description des dessins

L'invention et ses avantages seront mieux compris à la lecture de la description détaillée de modes de réalisation particuliers, pris à titre d'exemples nullement limitatifs et illustrés par les dessins annexés sur lesquels :
[Fig. 1] La figure 1 représente la structure chimique de la Safranine O ;
[Fig. 2] La figure 2 représente la structure chimique du bleu de méthylène ;
[Fig. 3] La figure 3 représente la structure chimique du nouveau bleu de méthylène ;
[Fig. 4] La figure 4 représente l'équation exprimant la vitesse de polymérisation Rp dans laquelle kₚ est la constante de vitesse de propagation, [M] la concentration en monomère(s) et/ou oligomère(s), kₜ est la constante de vitesse de terminaison, Φi le rendement quantique du photoamorceur B, l_{abs} la quantité de lumière absorbée et α un paramètre qui dépend des réactions de terminaisons ;

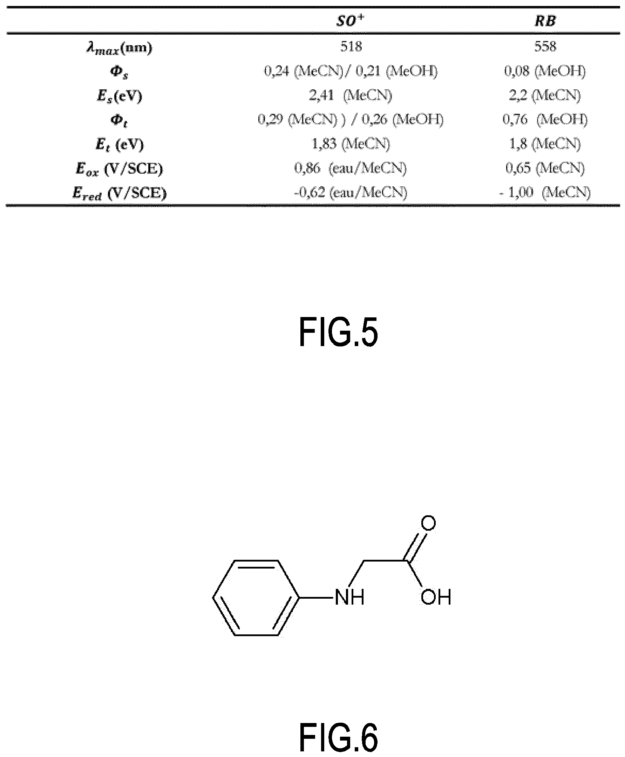

[Fig. 5] La figure 5 est un tableau représentant les propriétés photophysiques et oxydo-réductrices de la Safranine O (SO⁺) et du Rose Bengale, RB (Φₛ : rendement quantique d'état singulet, Eₛ : énergie de l'état singulet, Φₜ : rendement quantique d'état triplet, Eₜ: énergie de l'état triplet, les potentiels d'oxydation et de réduction ont été trouvés dans la littérature et convertis pour une électrode au calomel saturée (SCE)) ;
[Fig. 6] La figure 6 représente la structure chimique de la N-phénylglycine ;
[Fig. 7] La figure 7 représente les profils de conversion en fonctions acrylates (%) en ordonnée par rapport aux temps d'application de la source lumineuse en abscisse pour les compositions CP1 et CT1 obtenus par RT-FTIR ;
[Fig. 8] La figure 8 représente les taux de conversion et Rₚₘₐₓ (s⁻¹) obtenus pour la composition CP1 dans laquelle la concentration massique en NPG varie entre 0,2% en masse et 3% en masse ;
[Fig. 9] La figure 9 représente les taux de conversion et Rₚₘₐₓ (s⁻¹) obtenus pour la composition CP1 dans laquelle la concentration massique en Safranine O varie entre 0,05% en masse et 0,4% en masse ;
[Fig. 10] La figure 10 représente les taux de conversion et Rₚₘₐₓ (s⁻¹) obtenus pour la composition CP1 irradiée avec une intensité lumineuse comprise entre 5 mW/cm² et 180 mW/cm² ;
[Fig. 11] La figure 11 est un tableau décrivant la masse molaire, la viscosité à température ambiante, le nombre de fonctions acrylates et les structures de différents monomères testés dans la composition CP1 en replacement de SR306/E270 ;
[Fig. 12] La figure 12 représente les profils de conversion en fonctions acrylates (%) en ordonnée selon différents monomères dans la composition CP1 obtenus par RT-FTIR.
[Fig. 13] La figure 13 représente les profils de conversion en fonctions acrylates (%) en ordonnée pour deux colorants testés séparément, à savoir le bleu de méthylène (MB, courbe en pointillés) et le nouveau bleu de méthylène (NBM, courbe continue) lorsque le co-amorceur donneur d'électron est le N-phénylglycine dans la composition CP2 obtenus par RT-FTIR.

### Description des modes de réalisation

### Mesure du taux de conversion

La réaction de photopolymérisation peut être suivie par de nombreuses techniques, dont les suivantes : la spectroscopie infrarouge à transformée de Fourier résolue en temps (RT-FTIR), la photocalorimétrie, la pyrométrie optique, la spectroscopie Raman ou la résonance magnétique nucléaire (RMN), et de préférence par RT-FTIR.

Cette technique permet de suivre la disparition des doubles liaisons -C=C-, en particulier des fonctions acrylates, en fonction du temps, lors de l'exposition du renfort imprégné à une source lumineuse et, par ce biais, d'obtenir le taux de conversion en fonction -C=C- (i.e. le taux de conversion en monomère(s)/oligomère(s)). Une fois ce suivi effectué, le profil de photopolymérisation (ou la courbe conversion en fonction du temps) peut être tracé. La courbe peut être divisée en trois régimes différents. Le premier régime commence après l'irradiation : les états excités et les espèces réactives réagissent avec les inhibiteurs tels que l'oxygène, des stabilisants. C'est la période d'induction au cours de laquelle la polymérisation est inhibée. Ensuite, lorsque tous les inhibiteurs sont consommés, les espèces réactives réagissent avec la résine pour former des macro-radicaux qui se propagent : c'est le deuxième régime. La vitesse de polymérisation augmente rapidement pour atteindre une valeur maximale Rₚₘₐₓ. Enfin, comme la réaction se poursuit, la mobilité des espèces réactives devient de plus en plus faible ; la réaction de propagation est désormais contrôlée par la diffusion. Ce phénomène est appelé auto-décélération et provoque la diminution de la vitesse de réaction. Le milieu commence à se vitrifier et la réaction de polymérisation ralentit jusqu'à ce qu'un plateau soit atteint pour la conversion. La conversion finale de la polymérisation est contrôlée par la diffusion dans le milieu réactionnel et non plus par la quantité de résine (monomère(s)/oligomère(s)).

### Préparation d'une composition photopolymérisable

Une composition photopolymérisable selon l'invention (CP1) comprend 2g d'une résine acrylate (résultant d'un mélange en masse 50/50 d'un polyuréthane diacrylate, E270 (Allnex), et d'un monomère diacrylate SR 306 (Sartomer)), 1% en masse d'un co-amorceur donneur d'électron, notamment le NPG (N-phénylglycine) par rapport à la masse totale de la résine, et 0,1% en masse d'un photoamorceur B, dans cet exemple précis la Safranine O, les pourcentages massiques étant indiqués par rapport à la masse totale de la résine acrylate.

Une composition photopolymérisable témoin (CT1), identique à la précédente, comprend en remplacement de la Safranine O, un photoamorceur témoin (le Rose Bengale).

Une composition photopolymérisable CP2 est préparée de manière identique à CP1, et ne diffère de CP1 que en ce que la Safranine O est remplacée par le bleu de méthylène ou le nouveau bleu de méthylène, et que le NPG est présent à 3% en masse par rapport à la masse totale de la résine (i.e comprenant la résine acrylate et le monomère diacrylate).

Des films de 50µm d'épaisseur sont préparés à partir des compositions CP1 et CT1, et sont simultanément analysés par RT-FTIR et irradiés par une source lumineuse dont les longueurs d'ondes sont supérieures ou égales à λ1 = 532 nm, la puissance est de 180 mW.cm², la durée d'application est de l'ordre de 114 secondes (cette étape correspond au B stage, i.e à la polymérisation partielle).

Un film de 50µm d'épaisseur est préparé à partir de la composition CP2, et est simultanément analysé par RT-FTIR et irradié par une source lumineuse dont les longueurs d'ondes sont supérieures ou égales à λ1 = 633 nm, la puissance est de 50 mW.cm², la durée d'application est de l'ordre de 200 secondes (cette étape correspond au B stage, i.e à la polymérisation partielle).

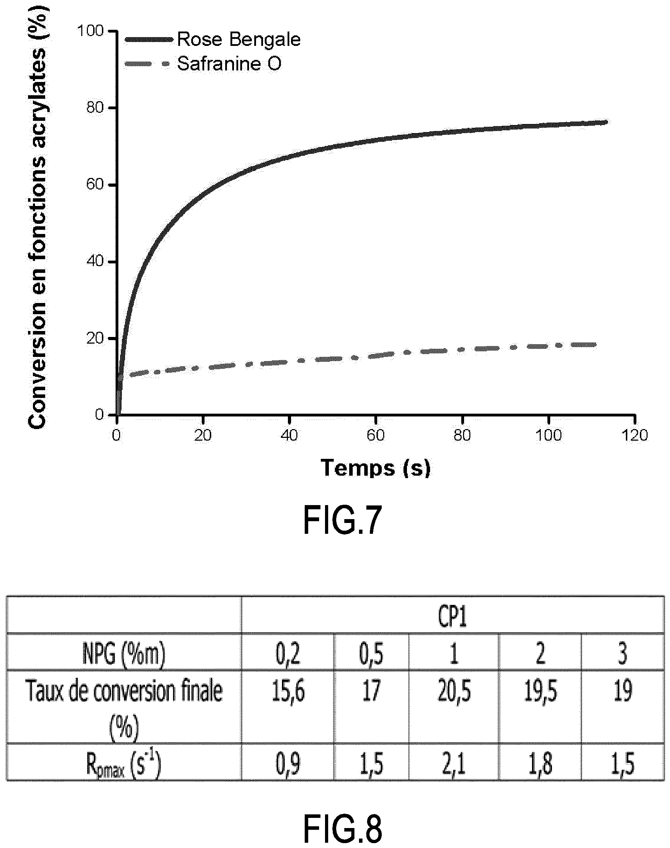

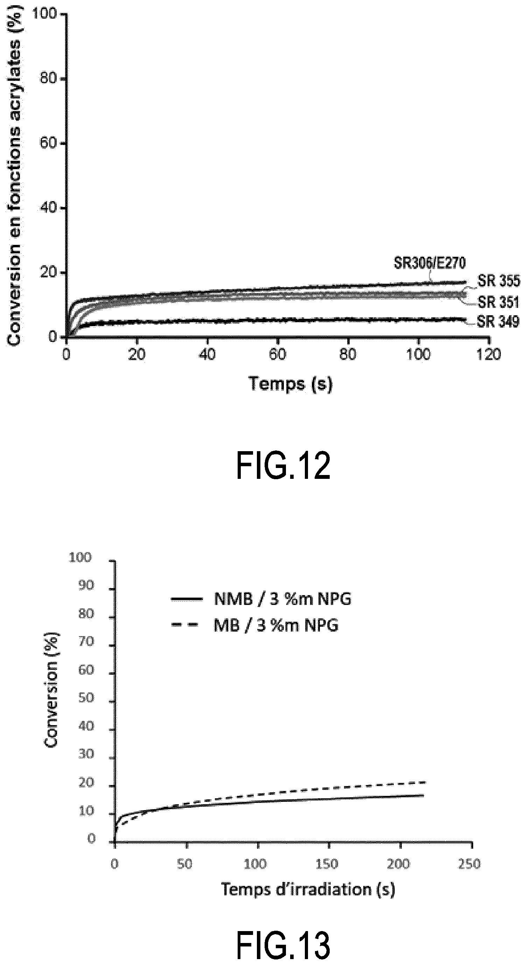

Les profils de conversion obtenus sont représentés sur la figure 7, et sur la figure 13. Le taux de conversion finale pour CT1 est de l'ordre de 76% contre 18,8% pour CP1, et de l'ordre de 21,5% pour CP2 (MB), et de l'ordre de 15,4% pour CP2 (NBM). La vitesse de photopolymérisation Rₚₘₐₓ (s⁻¹) est de l'ordre de 17,5 s⁻¹ pour CT1 contre 31,9 s⁻¹ pour CP1. Le taux de conversion finale faible selon l'invention est ainsi atteint 1,8 fois plus rapidement que pour CT1. La polymérisation partielle est ainsi atteinte de manière fiable rapidement ce qui est particulièrement avantageux pour la fabrication d'un pré-imprégné.

### Variation de la concentration en co-amorceur

On fait varier la concentration massique en co-amorceur NPG dans la composition photopolymérisable CP1 entre 0,2% en masse (par rapport à la masse totale de CP1) et 3% en masse (par rapport à la masse totale de CP1). Les taux de conversion et les vitesses de photopolymérisation Rₚₘₐₓ (s⁻¹) obtenus sont représentés sur le tableau représenté à la figure 8. Les taux de conversation augmentent pour des valeurs de NPG comprises entre 0,2% (m/m) et 1% (m/m) puis diminuent pour des valeurs de NPG supérieures à 3% (m/m), de même pour la vitesse de polymérisation. Un surdosage en co-amorceur n'entraine donc pas une augmentation du taux de conversion au-delà de la polymérisation partielle recherchée.

### Variation de l'intensité lumineuse

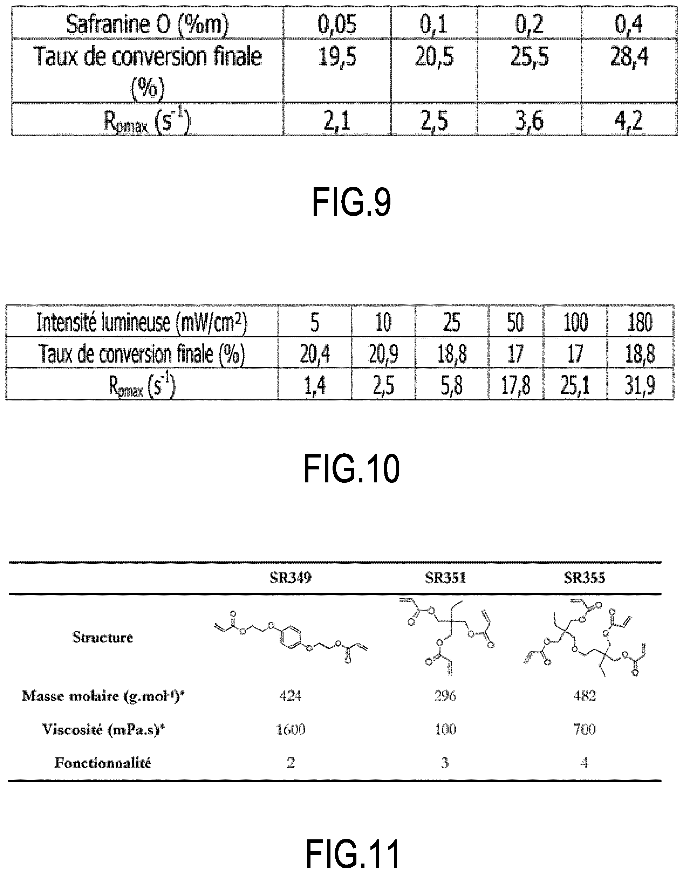

On fait varier l'intensité lumineuse à laquelle est soumise la composition photopolymérisable CP1 entre 5 mW/cm² et 180 mW/cm². Les taux de conversion et les vitesses de photopolymérisation Rₚₘₐₓ (s⁻¹) obtenus sont représentés sur le tableau représenté à la figure 10. Le taux de conversion finale est indépendant de l'intensité lumineuse.

### Variation de la structure du monomère

On fait varier la structure du monomère dans la composition photopolymérisable CP1 en remplaçant les 2g de résine par les résines indiquées au tableau représenté à la figure 11. Les taux de conversion et les vitesses de photopolymérisation Rₚₘₐₓ (s⁻¹) obtenus sont représentés sur le tableau représenté à la figure 12. Les résultats montrent que les caractéristiques du monomère (fonctionnalité, viscosité, squelette) importent peu puisque les profils de conversion en acrylates ont gardé le caractère singulier observé avec le mélange E270/SR306.

### Ajout du photoamorceur C

On ajoute un photoamorceur C à la composition photopolymérisable CP1, dans cet exemple précis le BAPO, à une concentration massique de 3% en masse par rapport à la masse totale de CP1. La source de rayonnement B appliquée est une diode laser dont les longueurs d'ondes émises sont supérieures ou égales à λ1, λ1 étant de l'ordre de 532 nm, à une puissance de 40 mW.cm², la durée d'application est de 20 secondes. Puis, le fil de 50 µm est laissé dans l'obscurité pendant 20 secondes. Ensuite, la source de rayonnement C est appliquée, elle comprend une lampe LED dont les longueurs d'ondes émises sont inférieures ou égales à λ2, λ2 étant de l'ordre de 395 nm, à une puissance de 10 mW.cm², la durée d'application est de 60 secondes. Le taux de conversion finale en fonctions acrylates, évalué par RT-FTIR, après l'application du rayonnement B est de l'ordre de 14%. Le photoamorceur B ne perturbe donc pas l'obtention d'une polymérisation partielle stable. Le taux de conversion finale en fonctions acrylates après application du rayonnement est de l'ordre de 82%. La photopolymérisation en deux étapes avec deux systèmes photosensibles est donc possible sans intéractions.

### Fabrication d'un pré-imprégné

Un renfort comprenant des fibres unidirectionnelles en verre de 500g/m² est imprégné de la composition CP1 avec 3% en masse de BAPO par rapport à la masse de la résine. La résine représente 35% en masse de la masse totale du renfort imprégné de la composition photopolymérisable. Le pourcentage massique du renfort est donc de l'ordre de 65%.

Le renfort imprégné de la résine est disposé entre deux films en polypropylène pour protéger l'ensemble. La première source de rayonnement est alors appliquée, il s'agit d'une lampe LED émettant des longueurs d'ondes supérieures ou égales à 515 nm, la puissance est de 10 mW/cm². La vitesse de défilement est de 10 mètre/min.

Le tack ou pégosité du pré-imprégné est évalué à l'aide d'un rhéomètre Anton-Paar (MCR302) à l'aide d'une sonde dédiée. Le tack ou pégosité est défini dans le présent texte selon la description indiquée dans la norme ASTM D1878-61T. Ce test consiste à approcher une sonde cylindrique à face plate ou légèrement convexe, de la surface adhésive à atteindre jusqu'à atteindre la force nominale désirée. Une fois atteinte, cette force nominale est maintenue pendant un temps prédéfini, puis la sonde est éloignée de la surface adhésive. On obtient ainsi trois phases : compression, relaxation et traction. La force maximale mesurée nécessaire au décollement de la sonde de la surface adhésive lors de la phase traction permet de calculer l'énergie adhésive de la surface adhésive testée.

Ainsi pour une dose lumineuse de 50 mJ/mm², l'énergie adhésive est de l'ordre de 360 mJ/m². La pégosité de la surface adhésive suite à la polymérisation est donc très bonne et permet de combiner les préimprégnés avec une bonne adhérence intercouches.

### Fabrication d'une pièce composite

### 1^{er} exemple

Une composition photopolymérisable CP4 comprend 988 g de résine polyester orthophtalique neopentyl glycol insaturée (par exemple la résine d'AOC/Aliancys Synolite 2103-Q1), 1 g de Safranine O (photoamorceur B), 2g de Genocure EHA (co-amorceur), 9 g de BAPO (photoamorceur C), 0,3g de Omnirad BDK (photoamorceur C).

Un paquet de 3 couches de renforts de fibre de verre constitué de pli unitaire de tissu 600g/m² et de mat coupé de 400 g/m² est imprégné à l'aide de la composition photopolymérisable CP4 au contact pour obtenir un pré imprégné final a un taux de fibres en masse de 50% (1000 g de composition photopolymérisable pour 1000 g de renfort en verre).

Ce renfort imprégné est placé sous une lampe Phoseon de puissance 8W/cm² de pic 465nm à une distance de 60 mm pendant 10 secondes, pour obtenir une pré gélification (polymerisation partielle), et le pré-imprégné. Ce pré-imprégné est ensuite durci sous une lampe de 400 W à une distance de 30cm pendant 3min.

Le stratifié final ainsi qu'un stratifié réalisé sans passer par le stade de pré gélification sont testés mécaniquement. Les valeurs mesurées sur la résistance en flexion 3 points et en module de Young ci jointes démontrent que le procédé de pré gélification ne dénature pas les performances mécaniques finales du composite.

Les préimprégnés, pliés à 180°, compactés et irradiés sous UV-Ga, présentent un module de flexion (GPa) de 12,65 +/- 0,36 GPa, une contrainte en flexion à Force Max de 290 +/- 23,14 MPa.

Les préimprégnés, sans pliage à 180°, compactés et irradiés sous UV-Ga, présentent un module de flexion (GPa) de 11,71 +/- 0,60 GPa, une contrainte en flexion à Force Max de 307 +/- 19,06 MPa.

### 2nd exemple

Une composition photopolymérisable CP5 comprend 993.8 g de résine polyester orthophtalique neopentyl glycol insaturée (par exemple la résine d'AOC/Aliancys Synolite 2103-Q1), 0,2 g de Safranine O (photoamorceur B), 2g de Genocure EPD (co-amorceur), 1g de BAPO (photoamorceur C), 3g de Omnirad BDK (photoamorceur C).

Un pli de renfort en fibres de verre, constitué de 600g/m² de tissu roving et de 400 g/m² de mat coupé, est imprégné de la composition CP5 sur un banc d'imprégnation, à l'aide d'une racle, pour obtenir un pré imprégné final avec un taux de fibres en masse de 50% (1000 g de CP5 pour 1000 g de renfort en verre).

Trois plis sont superposés en sorte de former un renfort qui est passé sous deux lampe Uwave, disposées de part et d'autre du renfort, de puissance 3W/cm² et de bandes d'émission entre 495 nm et 550 nm, avec un pic de 525nm à une distance de 60 mm pendant 25-30 secondes, pour obtenir une pré gélification (polymerisation partielle), et le pré-imprégné. Ce pré-imprégné est ensuite durci sous une lampe de 400 W dopée galium à une distance de 30cm pendant 3min pour l'obtention d'un pré-imprégné CP5.

Un exemple comparatif CT5 a été réalisé, identique à l'exemple CP5 à la différence que la Safranine O n'est pas présente, et le pré-imprégné est préparé par épaississement de manière connue avec de l'oxyde de magnésium.

Le module en flexion (GPa) pour le renfort CP5 est supérieur à 9,85 MPa, l'écart type est de 0,33 MPa, la contrainte de flexion à force max (MPa) est de 195,27 MPa, pour un écart type de 8,38 MPa.

Le module en flexion (GPa) pour le renfort CT5 est supérieur à 7,12 MPa, l'écart type est de 1,08 MPa, la contrainte de flexion à force max (MPa) est de 193,62 MPa, pour un écart type de 44,55 MPa.

Les performances mécaniques obtenues pour le composite (CP5) selon l'invention sont similaires, voire meilleures, concernant le module en flexion comparativement au composite CT5. Les performances mécaniques obtenues pour le composite CP5 sont par ailleurs plus fiables puisque les écarts types sont faibles, et nettement réduits comparativement à ceux obtenus pour CT5.

La présente invention permet ainsi d'offrir un procédé de fabrication d'une pièce composite entièrement par photopolymérisation fiable, s'affranchissant d'erreurs potentielles de fabrication, s'agissant par exemple du réglage de l'intensité lumineuse pour l'obtention du B-Stage.

## Revendications

1. Procédé de fabrication d'un préimprégné comprenant :
(i) la fourniture d'au moins un renfort, et d'au moins une composition photopolymérisable comprenant au moins une résine ayant au moins une double liaison carbone-carbone -C=C-, et au moins un photoamorceur B ;
(ii) application de la composition photopolymérisable sur ledit renfort en sorte d'imprégner ledit renfort ;
(iii) application d'une source de rayonnement B pour photopolymériser le renfort imprégné obtenu à l'étape ii) ;
(iv) obtention du pré-imprégné ; **caractérisé en ce que** ledit au moins un photoamorceur B est choisi parmi : la Safranine O, le bleu de méthylène, et le nouveau bleu de méthylène, ou leur mélange.

2. Procédé de fabrication selon la revendication **1, caractérisé en ce que** la composition photopolymérisable comprend un co-amorceur donneur d'électron(s) ou accepteur d'électron(s).

3. Procédé de fabrication selon la revendication **2, caractérisé en ce que** le co-amorceur est le N-phénylglycine.

4. Procédé de fabrication selon l'une quelconque des revendications **1 à 3, caractérisé en ce que** la composition photopolymérisable comprend au moins un photoamorceur C, différent du photoamorceur B.

5. Procédé de fabrication selon la revendication **4, caractérisé en ce que** la source de rayonnement B est une source lumineuse dont les longueurs d'ondes émises sont supérieures ou égales à λ1, et **en ce que** le photoamorceur C est excité par l'application d'une source de rayonnement lumineuse C dont les longueurs d'ondes émises sont inférieures ou égales à λ2, À2 étant inférieur à λ1.

6. Procédé de fabrication selon la revendication **5, caractérisé en ce que** λ2 est inférieure d'au moins 50 nm à λ1.

7. Procédé de fabrication selon l'une quelconque des revendications **1 à 6, caractérisé en ce que** le taux de conversion en fonction -C=C-, à l'issue de l'étape iii), est inférieur ou égal à 30%, encore de préférence inférieur ou égal à 25%.

8. Procédé de fabrication selon l'une quelconque des revendications **2 à 7, caractérisé en ce que** le rapport de la masse du co-amorceur par rapport à la masse totale de la composition photopolymérisable est inférieur ou égal à 3%, de préférence inférieur ou égal à 2%.

9. Procédé de fabrication selon l'une quelconque des revendications **1 à 8, caractérisé en ce que** le rapport de la masse en photoamorceur B par rapport à la masse totale de la composition photopolymérisable est inférieur ou égal à 3%, de préférence inférieur ou égal à 1%.

10. Procédé de fabrication selon l'une quelconque des revendications **1 à 9, caractérisé en ce que** ladite au moins une résine est choisie dans la liste constituée par : les résines polyesters insaturés, les résines vinylesters insaturés, les résines amines non bloquées, les résines urée-formaldéhydes, les résines phénoliques, les résines méthacrylates, les résines acrylates, les résines epoxys, les résines uréthanes isocyanates, les résines polyéthers, les résines polysiloxanes, ou un mélange de ces dernières.

11. Procédé de fabrication d'une pièce composite **caractérisé en ce qu'**il comprend :
(a) la mise en œuvre du procédé de fabrication d'un pré-imprégné selon l'une quelconque des revendications **1 à 10** pour l'obtention d'au moins un pré-imprégné ;
(b) la mise en forme dudit au moins un pré-imprégné et l'application d'une source de rayonnement C audit au moins un pré-imprégné pour photopolymériser la composition photopolymérisable dudit au moins un pré-imprégné ;
(c) obtention de la pièce composite.

12. Procédé de fabrication selon la revendication **11, caractérisé en ce que** les sources de rayonnement B et C sont des sources lumineuses, et **en ce que** la source lumineuse B émet des longueurs d'ondes λ1 supérieures aux longueurs d'ondes À2 émises par la source lumineuse C.

13. Procédé de fabrication selon l'une quelconque des revendications 1 à 12, **caractérisé en ce que** ledit au moins un renfort imprégné de la composition photopolymérisable obtenu à l'étape ii) présente une première couleur, notamment correspondant à la coloration dudit au moins un photoamorceur B, et **en ce que** le pré-imprégné obtenu à l'étape iv) présente une seconde couleur, différente de la première couleur.

14. Utilisation d'au moins un photoamorceur B choisi parmi : la Safranine O, le bleu de méthylène, et le nouveau bleu de méthylène, ou leur mélange, pour la fabrication d'un pré-imprégné par application d'une source de rayonnement B sur au moins un renfort imprégné d'une composition photopolymérisable comprenant au moins résine comprenant au moins une double liaison carbone-carbone -C=C-.

15. Utilisation selon la revendication **14, caractérisé en ce que** la composition photopolymérisable comprend en outre un co-amorceur donneur d'électron(s) ou accepteur d'électron(s).
